# EUROPEAN PATENT SPECIFICATION

(11) **EP 3 558 627 B1**
(45) Date of publication and mention of the grant of the patent: **16.03.2022**
(21) Application number: 17791105.4
(22) Date of filing: 31.10.2017
(51) Int. Cl.: B29C 48/08, B29C 48/12, B29C 48/21, B29C 48/35, B29C 48/49, B29D 30/06, B29L 30/00

(54) **METHOD FOR THE CO-EXTRUSION OF A COMPLEX RUBBER PROFILED ELEMENT INTENDED FOR THE MANUFACTURE OF TYRES**
VERFAHREN ZUR CO-EXTRUSION EINES KOMPLEXEN GUMMIPROFILELEMENTS ZUR HERSTELLUNG VON REIFEN
PROCÉDÉ DE COEXTRUSION D'UN ÉLÉMENT PROFILÉ EN CAOUTCHOUC COMPLEXE DESTINÉ À LA FABRICATION DE PNEUS

(30) Priority: 20.12.2016 FR 1662944
(43) Date of publication of application: 30.10.2019
(73) Proprietor: Compagnie Générale des Etablissements Michelin, 63000 Clermont-Ferrand (FR)
(72) Inventor: ROUBY, Mickaël, 63040 Clermont-Ferrand Cedex 9 (FR); BESSAC, Christophe, 63040 Clermont-Ferrand Cedex 9 (FR)
(74) Representative: Roussy, Delphine
(86) International application number: PCT/EP2017/077858
(87) International publication number: WO 2018/114105

(56) References cited:
- EP-A2- 0 139 604
- WO-A1-99/38664
- WO-A1-2012/156404
- FR-A1- 2 648 388
- FR-A1- 2 916 383
- US-A- 4 526 528

## Description

The invention falls within the field of tyre manufacture, and more precisely within the field of the co-extrusion of complex rubber profiled elements.

What is meant by a complex rubber profiled element is a profiled element made up of different profiled elements made from different elastomeric compounds and assembled with one another.

When a green tyre is being built, a profiled element of tyre tread taking the form of a portion cut from a complex and unvulcanized rubber profiled element is laid on the shaped carcass.

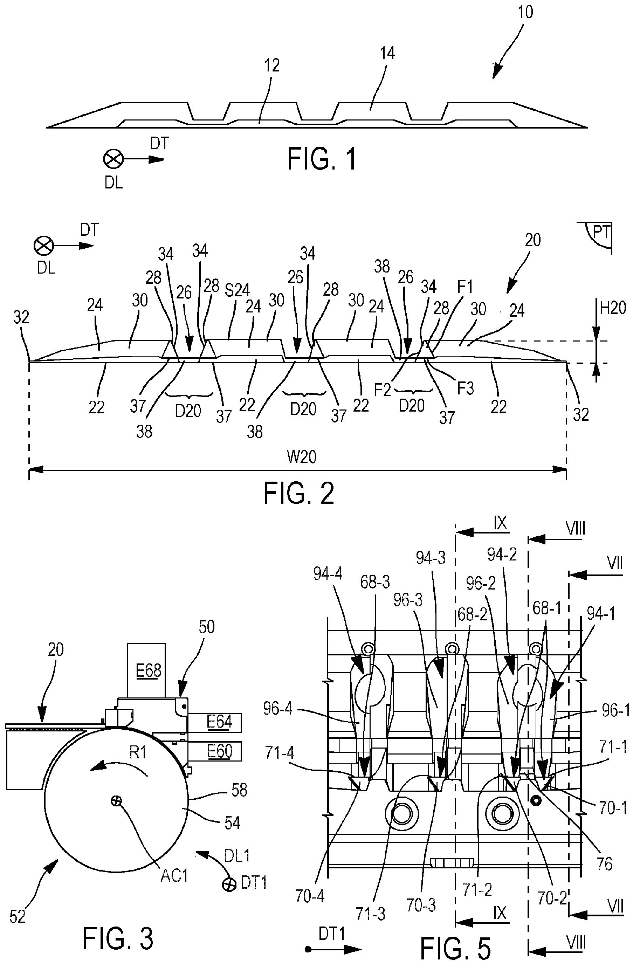

More specifically, and as illustrated in Figure 1, this portion of complex rubber profiled element 10 includes a transversely continuous sublayer 12 upon which another transversely continuous layer 14 is superposed. This other layer 14 is referred to as the tread because it is intended to come into contact with the ground when the tyre is running along the ground. Because the sublayer 12 is not intended to come into contact with the ground, it is made from a different elastomeric compound from the tread 14 and does not, for example, have the same composition or the same characteristics and performance.

According to a known method of manufacture, this complex rubber profiled element is obtained by co-extrusion. Using this technique, the various profiled elements of different compounds of the complex profiled element are extruded and assembled simultaneously, on a single manufacturing machine.

Co-extrusion also allows the manufacture of complex profiled elements including a sublayer 12, a tread 14, and other protective profiled elements superposed on the transverse ends of the tread 14 and made from a third elastomeric compound having a composition and characteristics that are different from the characteristics of the sublayer compound and of the tread compound.

However, and like the sublayer 12 and the tread 14, these protective profiled elements are transversely continuous.

Because of the poor electrical conductivity of the elastomeric compounds used for producing the sublayer 12 and the tread 14, co-extrusion machines have been developed that allow the sublayer 12 and the tread 14 to be co-extruded with an insert, made from an electrically conducting elastomeric compound, passing through them. Examples of such machines and their associated methods of use are disclosed by European Patent No. EP0139604 (directed to an apparatus and method of forming a co-extrusion of at least two component strips); PCT Publication No. WO99/38664 (directed an apparatus and method for controlling die swell of a viscoelastic material); and French Patent No. FR2648388 (directed to an extrusion apparatus for combining two or more bands of extruded elastomeric material).

Such a co-extrusion machine is also described, for example in European Patent EP1448355.

According to that document EP1448355, this machine provides a main extruder having an extrusion head with at least two ducts for the flow of a sublayer rubber compound and of a tread rubber compound, the ducts opening onto an extrusion orifice through which the two, sublayer and tread, rubber compounds are discharged, and the extrusion orifice being delimited by a first wall and a second wall.

In order to create an electrically conducting insert through the sublayer and the tread of the co-extruded complex profiled element, the extrusion head also includes at least one micro-extruder of a third, electrically conducting, rubber compound, and the extrusion head of this micro-extruder is equipped at its end with a nozzle, the nozzle passing through the two flow ducts so that the third, electrically conducting, rubber compound is inserted into the sublayer and tread rubber compounds upstream of the extrusion orifice.

A first disadvantage is that the nozzle described in that document EP1448355 is not suitable for extruding an insert made from an elastomeric compound that confers superior stiffness, or at least stiffness higher than the stiffness conferred on each of the sublayer and the tread by their respective compounds. This is because such a compound would need an extrusion pressure that is too high in comparison with the extrusion pressures used to extrude the sublayer and tread compounds, and this could detract from the quality of the co-extruded complex profiled element, notably by leading to the extrusion of an insert that is far wider than needed for electrical conduction or of a cross section that can vary randomly along the length of the profiled element.

Another disadvantage, and regardless of whether or not the third compound extruded by this nozzle gives the insert high stiffness, is that this nozzle does not allow the third material to be extruded with a cross section that is precise in the transverse plane of the complex profiled element. Furthermore, neither does this nozzle make it possible to create an insert that is not flanked on either side by the tread and the sublayer.

Yet, with the increasing use of treads made from elastomeric compounds that give these treads increasingly low stiffness and therefore increasingly high hysteresis, there is nowadays within the tyre building industry a need to stiffen the complex tread profiled elements via inserts that have a precise cross section in the transverse plane of the complex profiled element, that are not flanked on either side by the tread and the sublayer and that are made from an elastomeric compound that gives them a stiffness higher than the stiffness conferred upon the sublayer and the tread by their respective compounds.

Thus, an objective of the present invention is to combat at least one of the disadvantages identified in the prior art and to meet the aforementioned needs of industry.

To this end, one subject of the invention is a method for the co-extrusion of a complex rubber profiled element intended for the manufacture of a tyre, the complex profiled element comprising along its height a first layer, referred to as sublayer, of a first rubbery material, and a second layer, referred to as tread, of a second rubbery material superposed on the sublayer, this tread and this sublayer having at least one discontinuity in the width of the complex profiled element that extends in a transverse direction so that at least one insert of a third rubbery material is inserted into a discontinuity of the tread and of the sublayer at the time of co-extrusion.

According to the invention, the method consists in extruding and profiling the various rubbery materials over a given co-extrusion width and in a longitudinal direction of co-extrusion perpendicular to the transverse plane of the co-extruded profiled element, the method comprising the following succession of steps consisting in:
a) extruding the first material, this being performed discontinuously across the co-extrusion width,
b) profiling the first material, performed discontinuously across the co-extrusion width,
c) extruding the second material, this being performed discontinuously across the co-extrusion width and performed in such a way as to superpose the second material on the first material,
d) profiling the first and second materials to a profile exhibiting no discontinuity across the co-extrusion width but creating at least one longitudinal groove in the profiled element, this profiling being performed jointly with at least an extruding of the third material next to each longitudinal groove created in the profiled element,
e) final profiling of the first, second and third materials to a final profile exhibiting no discontinuity across the co-extrusion width but allowing its final shape to be given to each longitudinal groove created in the profiled element in the preceding step d) and situated transversely next to each insert originating from an extrusion of the third material according to the preceding step d).

Further features and advantages of the invention will become apparent from the following description. This description, which is given by way of non-limiting example, refers to the appended drawings, in which:
- Figure 1 is a schematic view in cross section of a complex rubber profiled element according to the prior art,
- Figure 2 is a schematic view in cross section of a complex rubber profiled element that can be produced with a co-extrusion head according to the invention,
- Figure 3 is a schematic side view of a co-extrusion machine comprising a co-extrusion head according to the invention,
- Figure 4 is a perspective view of a co-extrusion head according to the invention;
- Figure 5 is a detailed face-on view of a co-extrusion head according to the invention;
- Figure 6 is a first view in longitudinal section of a co-extrusion head according to the invention;
- Figure 7 is a second view in longitudinal section of a co-extrusion head according to the invention;
- Figure 8 is a third view in longitudinal section of a co-extrusion head according to the invention; and
- Figure 9 is a fourth view in longitudinal section of a co-extrusion head according to the invention.

Figure 2 schematically illustrates a complex rubber profiled element intended for the manufacture of tyres and that can be manufactured by co-extrusion using the present invention.

This complex rubber profiled element 20 includes along its height H20 a first layer 22, referred to as sublayer, of a first rubbery material, and the second layer 24, referred to as tread, of a second rubbery material superposed on the sublayer 22.

What is meant by a rubbery material is an unvulcanized elastomeric compound. Within the context of the present invention, the sublayer 22 and the tread 24 are made from different materials, and therefore from elastomeric compounds that do not have the same composition and/or the same characteristics.

Moreover, and with a view to creating the circumferential voids of the future tyre, the complex rubber profiled element 20 also includes longitudinal grooves 26. In the example illustrated in Figure 2, the complex rubber profiled element 20 has three longitudinal grooves 26. These three longitudinal grooves 26 run parallel to one another in the longitudinal direction DL considered along the length of the complex profiled element 20. These three longitudinal grooves 26 are spaced apart from one another in the transverse direction DT considered across the width W20 of the complex profiled element 20. These three longitudinal grooves 26 extend depthwise into the height H20 of the complex profiled element 20, without passing through same. These three longitudinal grooves 26 open onto the upper surface S24 of the tread 24. These three longitudinal grooves 26 divide the profiled element into four longitudinal blocks 30, in which the tread patterns of the future tyre will be moulded. The two central blocks 30 have a substantially parallelepipedal profile in the transverse plane PT of the complex profiled element 20, whereas the end blocks 30 have a substantially trapezoidal profile in the transverse plane PT of the complex profiled element 20 and taper toward the transverse ends 32 of the complex profiled element 20 in the transverse direction DT.

According to the invention, this tread 24 and this sublayer 20 have at least one discontinuity D20 in the width W20 of the complex profiled element 20 so that at least one insert 28 of a third rubbery material is inserted into each discontinuity D20 of the tread 24 and of the sublayer 22 at the time of co-extrusion.

As the complex rubber profiled element 20 has three longitudinal grooves 26 in the example illustrated in Figure 2, the tread 24 and the sublayer 22 exhibit three discontinuities D20 in the width W20 of the complex profiled element 20 and at least one insert 28 in each of these discontinuities D20.

The third rubbery material from which the inserts 28 are made is different from the materials of the sublayer 22 and of the tread 24. This third material of the inserts 28 is an elastomeric compound having a different composition and/or different characteristics from the compounds that form the sublayer and the tread. Advantageously, this third material of the inserts 28 offers higher stiffness than the materials of the sublayer 22 and of the tread 24. Thus, the inserts 28 make it possible to stiffen the longitudinal blocks 30, thereby making it possible to use, for the creation of the tread 24, a material that is less stiff and offers the future tyre better grip performance.

More specifically, each insert 28 extends into the height H20 of the complex profiled element 20 without passing through it, a thickness of sublayer 22 being present underneath each insert 28. Each insert 28 has a precise cross section in the transverse plane PT of the profiled element 20. Thus, the cross section of an insert 28 in the transverse plane PT includes at least one triangular subsection.

According to the invention, the cross section of an insert 28 in the transverse plane PT is triangular. In addition, two inserts 28 of triangular cross section may lie in one and the same discontinuity D20 while at the same time being distant from one another in the transverse direction DT. Irrespective of whether there are one or two inserts 28 in a discontinuity D20, the bottom of a longitudinal groove 26 is made up of a band 38 of substantially parallelepipedal cross section, of the material of the tread 24.

Each insert 28 forms a sidewall 34 of a block 30. Therefore, a first face F1 of an insert 28 extending along the height H20 of the profiled element 20 is closely adjacent to the material of the tread 24, a second face F2 of an insert 28 extending into the height H20 of the profiled element 20 forms the sidewall 34 of a block 30, and a third face F3 of an insert 28 is closely adjacent to the material of the sublayer 22.

In order to co-extrude a complex profiled element 20, the invention proposes a co-extrusion head 50. As illustrated in Figure 3, the head 50 is intended to be mounted on a co-extrusion machine 52 with cylindrical roller 54. To this end, the head 50 has a lower wall 56 of cylindrical profile extending radially lengthwise in a longitudinal direction DL1 about a central axis AC1 and extending rectilinearly widthwise in a transverse direction DT1 parallel to the central axis AC1 and perpendicular to the longitudinal direction DL1. This lower wall 56 is intended to be attached to the exterior wall 58 of the cylindrical roller 54 so that the complex profiled element 20 can be co-extruded. During operation of the co-extrusion machine, the cylindrical roller 54 is rotated R1 about the central axis AC1.

According to the invention, the head 50 includes, from upstream to downstream of this lower wall 56 of cylindrical profile, and in the longitudinal direction DL1:
a) a first extrusion unit B60 comprising a first extrusion duct 60 opening into the lower wall 56 of the co-extrusion head, this first extrusion duct 60 being divided into various sub-ducts 60-1, 60-2, 60-3, 60-4 in the transverse direction DT1,
b) a first profiling blade 62 defining a first shaping profile P62 that is discontinuous in the transverse direction DT1 and situated radially beyond the lower wall 56 of the co-extrusion head intermittently in the transverse direction DT1,
c) a second extrusion unit B64 comprising a second extrusion duct 64 opening into the lower wall 56 of the co-extrusion head, this second extrusion duct 64 being divided into various sub-ducts 64-1, 64-2, 64-3, 64-4 in the transverse direction DT1,
d) a second profiling blade 66 defining a second shaping profile P66 situated radially beyond the lower wall 56 of the co-extrusion head, this second profile P66 having no discontinuity in the transverse direction DT1 but the second profiling blade 66 having at least one tooth 67-1,67-2,67-3 extending radially inwards but not reaching the lower wall 56 of the co-extrusion head, each tooth 67-1, 67-2, 67-3 being situated in the continuation of the longitudinal direction DL1 of a divider 72-1, 72-2, 72-3 dividing the first extrusion duct 60 into sub-ducts 60-1, 60-2, 60-3, 60-4 in the transverse direction DT1, creating a discontinuity in the first shaping profile P62 of the first profiling blade 62 in the transverse direction DT1, and dividing the second extrusion duct 64 into sub-ducts 64-1, 64-2, 64-3, 64-4 in the transverse direction DT1, and this second profiling blade P66 incorporating at least one third extrusion duct 68-1, 68-2, 68-3 opening into the lower wall 56 of the co-extrusion head, and each outlet 70-1, 70-2, 70-3, 70-4 of a third extrusion duct closely adjoining a tooth 67-1, 67-2, 67-3 of the second profiling blade 66, and
e) a third profiling blade 74 defining a final shaping profile P74 situated radially beyond the lower wall 56 of the co-extrusion head, this final shaping profile P74 having no discontinuity in the transverse direction DT1, the third profiling blade 74 having at least one tooth 74-1, 74-2, 74-3 extending radially inwards but not reaching the lower wall 56 of the co-extrusion head, each tooth 74-1, 74-2, 74-3 of this third profiling blade 74 being situated in front of a tooth 67-1, 67-2, 67-3 of the second profiling blade 66.

While the first extrusion duct 60 allows the first material of the sublayer 22 to be extruded, the sub-ducts 60-1, 60-2, 60-3, 60-4 allow this first material to be extruded discontinuously in the co-extrusion width L50 of the co-extrusion head 50. Thus, the sub-ducts 60-1, 60-2, 60-3, 60-4 make it possible to generate the discontinuities D20 in the sublayer 22 as soon as this first material is extruded.

Next, the discontinuous first profiling blade 62 includes projecting shapes 62-1, 62-2, 62-3 extending radially inwards as far as the lower wall 56 and allowing the first material of the sublayer 22 to be profiled while at the same time maintaining the discontinuities D20 created upstream in this sublayer by the sub-ducts 60-1, 60-2, 60-3, 60-4.

While the second extrusion duct 64 allows the second material of the tread 24 to be extruded, the sub-ducts 64-1, 64-2, 64-3, 64-4 allow this second material to be extruded discontinuously in the co-extrusion width L50 of the co-extrusion head 50. Thus, the sub-ducts 64-1, 64-2, 64-3, 64-4 make it possible to generate the discontinuities D20 in the tread 24 as soon as this second material is extruded.

The teeth 67-1, 67-2, 67-3 of the second profiling blade 66 then allow the first and second materials of the sublayer 22 and of the tread 24 to be profiled in the continuation of the discontinuities D20 created upstream in this sublayer 22 and in this tread 24 by the sub-ducts 60-1, 60-2, 60-3, 60-4 of the first duct 60 and by the sub-ducts 64-1, 64-2, 64-3, 64-4 of the second duct 64.

By being closely adjacent to a tooth 67-1, 67-2, 67-3 of the second profiling blade 66, the outlet 70-1, 70-2, 70-3 of each third extrusion duct 68-1, 68-2, 68-3 allows the third material to be extruded in the region of the sidewall 34 of a future groove 26 and thus allows the inserts 28 of this third material to be created in the profiled element 20.

The third profiling blade 74 completes the profiling of the three materials and gives the profiled element 20 the desired final exit profile. Each tooth 74-1, 74-2, 74-3 of this third blade 74 is situated in the continuation of a tooth 67-1, 67-2, 67-3 of the second profiling blade 66 and allows a groove 26 to be created in the complex profiled element 20 closely adjacent to one or two inserts 28 in the transverse direction DT1.

In the co-extrusion head 50 according to the invention, each projecting form 62-1, 62-2, 62-3 of the first profiling blade 62 respectively forms part of a divider 72-1, 72-2, 72-3.

When the co-extrusion head 50 is mounted on the co-extrusion machine 52, the ducts 60, 64 and the sub-ducts 60-1, 60-2, 60-3, 60-4, 64-1, 64-2, 64-3, 64-4 open into the lower wall 56 and the shaping profiles P62 and P66 of the first and second profiling blades are closed by the external wall 58 of the roller 54.

In order to create a band 37 of non-zero height and width from the first material of the sublayer 22 under each insert 28, each divider 72-1, 72-2, 72-3 includes at least one longitudinal cut-out 94-1, 94-2, 94-3, 94-4 extending from the first extrusion unit B60 to the second extrusion unit B64 via the first profiling blade 62 and extending heightwise radially outwards from the lower wall 56 of the co-extrusion head.

Considered facing the first extrusion unit B60 and the first profiling blade 62 and the second extrusion unit B64, the longitudinal surface 96-1, 96-2, 96-3, 96-4 of each divider 72-1, 72-2, 72-3 starting from a longitudinal cut-out extends radially at various constant heights from the lower wall 56 of the co-extrusion head.

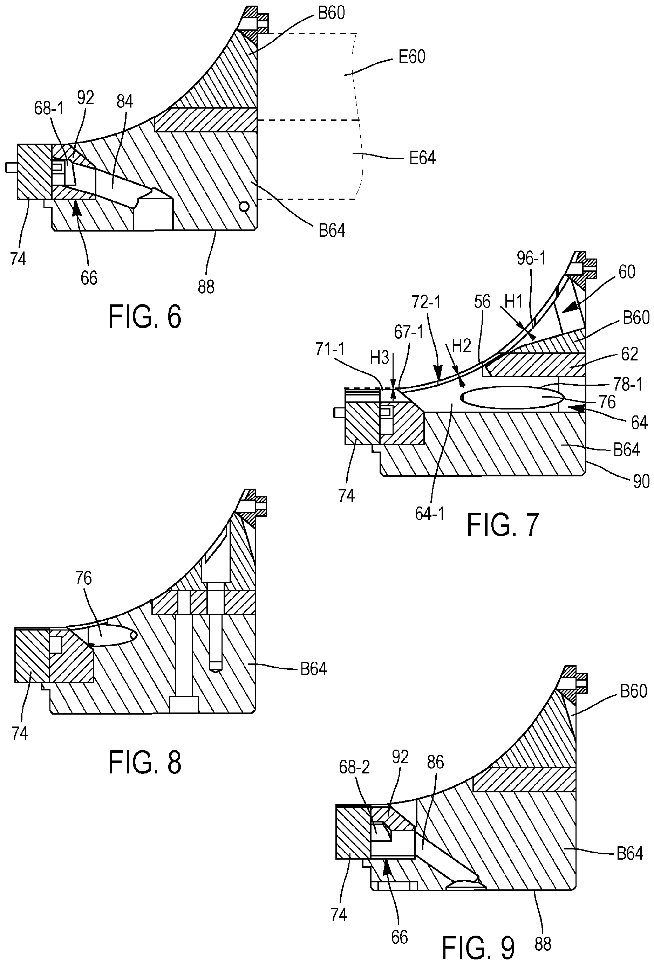

More specifically, and as illustrated in Figure 7, with the longitudinal surface 96-1, 96-2, 96-3, 96-4 of a longitudinal cut-out extending at a first height H1 with respect to the lower wall 56 of the co-extrusion head when this longitudinal surface belongs to the first extrusion unit B60, and the longitudinal surface 96-1, 96-2, 96-3, 96-4 of a longitudinal cut-out extending at a second height H2 with respect to the lower wall 56 of the co-extrusion head when this longitudinal surface belongs to the first profiling blade 62 and to the second extrusion unit B64, the first height H1 of this longitudinal surface is greater than the second height H2 of this longitudinal surface. Thus, the height of first material present in the longitudinal cut-outs is progressively reduced in stages, making it possible to ensure the correct geometry of the band 38 of first material under an insert 28.

In order to extrude a band 37 of first material of non-zero height and width upstream of each third-material outlet section, each longitudinal cut-out 94-1, 94-2, 94-3, 94-4 opens upstream and facing an outlet 70-1, 70-2, 70-3, 70-4 of a third extrusion duct 68-1, 68-2, 68-3 of the second profiling blade P66.

Also, with the longitudinal surface 96-1, 96-2, 96-3, 96-4 of a longitudinal cut-out extending at a height H2 with respect to the lower wall 56 of the co-extrusion head when this longitudinal surface belongs to the first profiling blade 62 and to the second extrusion unit B64, and with the lower edge 71-1, 71-2, 71-3, 71-4 of each outlet 70-1, 70-2, 70-3, 70-4 of a third extrusion duct 68-1, 68-2, 68-3 facing which this longitudinal surface 96-1, 96-2, 96-3, 96-4 opens extending at a height H3 with respect to the lower wall 56 of the co-extrusion head, the height H3 of the lower edge 71-1, 71-2, 71-3, 71-4 of an outlet 70-1, 70-2, 70-3, 70-4 is greater than the height H2 of the longitudinal surface 96-1, 96-2, 96-3, 96-4 belonging to the first profiling blade 62 and to the second extrusion unit B64.

In order to give the cross section of an insert 28 at least one triangular subsection in the transverse plane PT of the profiled element 20, the outlet cross section of each third duct 68-1, 68-2, 68-3 includes at least one triangular subsection in a transverse plane PT50 perpendicular to the longitudinal direction DL1. More specifically, one vertex of this triangular subsection extends radially outwards from the lower wall 56 of the co-extrusion head.

In order to create two triangular inserts 28 on either side of a groove 26 of the profiled element 20, a third extrusion duct 68-1 includes two outlets 70-1, 70-2 closely adjacent to either side of a tooth 67-1 of the second profiling blade P66, each of these outlets 70-1, 70-2 having a triangular cross section.

Also, the divider 72-1 situated upstream of the tooth 67-1 flanked by the two outlets 70-1, 70-2 of a third extrusion duct 68-1 includes two lateral longitudinal cut-outs 94-1, 94-2, each of these lateral longitudinal cut-outs 94-1, 94-2 opening facing one of the two outlets 70-1, 70-2 of the third extrusion duct 68-1.

In order to extrude the band 38 of tread 24 that forms the bottom of a groove 26 surrounded by two inserts 28 of triangular cross section, each divider 72-1 in the continuation of which there is situated a tooth 67-1 closely adjacent to two outlets 70-1, 70-2 has an internal duct 76 connecting at least one sub-duct 64-1, 64-2, and preferably both sub-ducts 64-1, 64-2, of the second extrusion duct 64 to the lower wall 56 of the co-extrusion head, this internal duct 76 opening into this lower wall 56 upstream of the two outlets 70-1, 70-2 of the third duct 68-1 in the longitudinal direction DL 1 and between these two outlets 70-1, 70-2 in the transverse direction DT1.

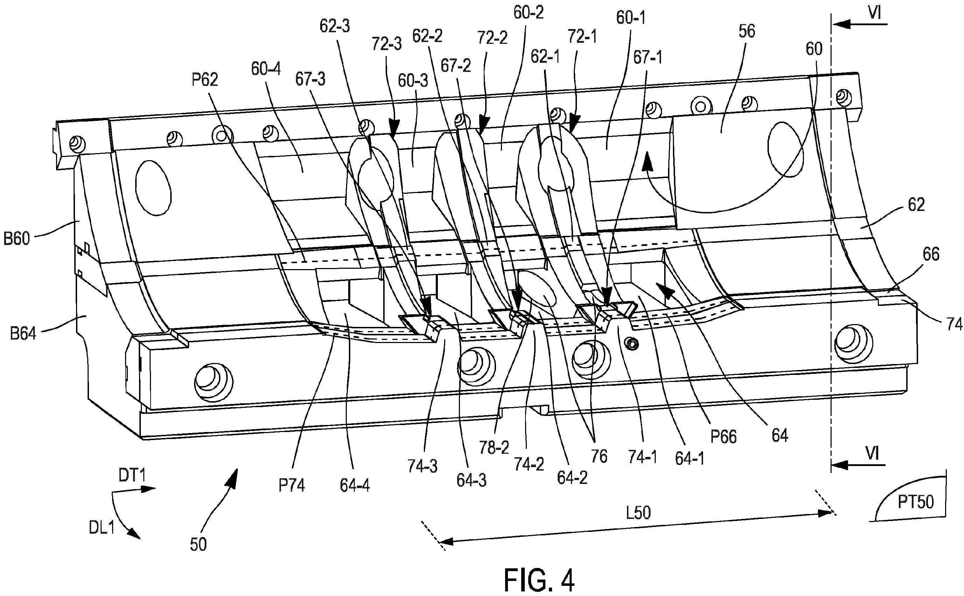

As shown in Figure 4, this internal duct 76 is produced through the divider 72-1 that divides the second extrusion duct 64 into two sub-ducts 64-1, 64-2 and in the continuation of which the two triangular outlets 70-1, 70-2 of the third duct 68-1 are situated, some distance apart. For preference, and in order to ensure that the internal duct 76 is supplied with the tread material 24, this internal duct 76 includes two inlets 78-1, 78-2 respectively connected to the two sub-ducts 64-1, 64-2.

In the example illustrated in the figures, the co-extrusion head 50 includes three dividers 72-1, 72-2, 72-3, in the transverse direction DT1, these three dividers dividing the first extrusion duct 60 into four sub-ducts 60-1, 60-2, 60-3, 60-4, creating three discontinuities in the first shaping profile P62 of the first profiling blade 62 and dividing the second extrusion duct 64 into four sub-ducts 64-1, 64-2, 64-3, 64-4. The projecting shapes 62-1, 62-2, 62-3 of the first profiling blade 62 form an integral part of these dividers 72-1, 72-2, 72-3.

Still in the example illustrated in the figures, the co-extrusion head 50 includes two consecutive dividers 72-3, 72-2 in the transverse direction DT1 each followed in the longitudinal direction DL1 by a single triangular outlet 70-4, 70-3, the first divider 72-1 being followed in the longitudinal direction DL1 by two triangular outlets 70-1, 70-2 .

With a view to extruding the various materials of the tread 24, of the sublayer 22 and of the inserts 28, and as shown in Figures 3 and 6, the first duct 60 is connected to a first extruder E60, the second duct 64 is connected to a second extruder E64, and the third ducts 68-1, 68-2, 68-3 of the second profiling blade 66 are connected to a third extruder E68.

More specifically, the third ducts 68-1, 68-2, 68-3 of the second profiling blade 66 are connected to a third extruder E68 via conduits 84,86 opening onto the upper face 88 of the co-extrusion head 50.

As shown in Figure 7, the first extrusion duct 60 belongs to a first extrusion unit B60, and this first extrusion duct 60 opens onto the rear face 90 of the co-extrusion head 50 where it is connected to the first extruder E60. The second extrusion duct 64 belongs to a second extrusion unit B64, and this second extrusion duct 64 opens onto the rear face 90 of the co-extrusion head 50 where it is connected to the second extruder E64.

As shown in Figures 6 to 9, the third ducts 68-1, 68-2, 68-3 of the second profiling blade 66 are made in the body 92 of this second profiling blade 66, whereas the conduits 84,86 connecting them to the third extruder E68 are made through the second extrusion unit B64.

Also, the co-extrusion had 50 is formed by the assembly of the first extrusion unit B60, of the first profiling blade 62, of the second extrusion unit B64, and of the second and third profiling blades 66 and 74.

More generally, the present invention also relates to a method of co-extruding a complex rubber profiled element 20 intended for the manufacture of a tyre, it being possible notably for this method to be implemented using the co-extrusion head 50 that has just been described.

According to the invention, the method consists in extruding and profiling the various rubbery materials of this profiled element 20 over a given co-extrusion width L50 and in a longitudinal direction DL1 of co-extrusion perpendicular to the transverse plane PT of the co-extruded profiled element, the method comprising the following succession of steps consisting in:
a) extruding the first material, this being performed discontinuously across the co-extrusion width L50,
b) profiling the first material, performed discontinuously across the co-extrusion width L50,
c) extruding the second material, this being performed discontinuously across the co-extrusion width L50 and performed in such a way as to superpose the second material on the first material,
d) profiling the first and second materials according to a profile P66 exhibiting no discontinuity across the co-extrusion width L50 but creating at least one longitudinal groove 26 in the profiled element 20, this profiling being performed jointly with at least one extruding of the third material next to each longitudinal groove 26 created in the profiled element 20,
e) final profiling of the first, second and third materials according to a final profile P74 exhibiting no discontinuity across the co-extrusion width L50 but allowing its final shape to be given to each longitudinal groove 26 created in the profiled element 20 in the preceding step d) and situated transversely next to each insert 28 originating from an extrusion of the third material according to the preceding step d).

Advantageously, by extruding the third material of the inserts 28 at the end of the co-extrusion method, the geometry of the extruded inserts 28 is preserved from the flows of the first and second materials extruded upstream.

More specifically, because the third material is extruded next to each longitudinal groove 26 according to an outlet cross section of determined shape, a band of non-zero height and width of the first material is extruded upstream of each third-material outlet section and underneath each third-material outlet section.

More specifically, and in order to ensure the correct geometry of the band 38 of the first material present under an insert 28, the height of first material extruded upstream of each third-material outlet section is progressively reduced.

More specifically still, the height of first material extruded upstream of each third-material outlet section is reduced in stages.

During step d), the third material is extruded according to an outlet cross section in a transverse plane PT50 containing at least one triangular subsection and in such a way that this triangular subsection constitutes one sidewall of a longitudinal groove 26 created in the profiled element 20.

In order to create two triangular inserts 28 on either side of a groove 26 of the profiled element 20, during step d), the third material is extruded according to an outlet cross section in a transverse plane PT50 containing two triangular subsections distant from one another in the transverse direction of extrusion DT1 and in such a way that the third material extruded by these triangular subsections constitutes the two sidewalls of a longitudinal groove 26 created in the profiled element 20.

In order to extrude the band 38 of tread 24 that forms the bottom of a groove 26 surrounded by two inserts 28 of triangular section at the same time as performing step c), part of the flow of the second material is diverted toward a discontinuity D20 created during steps a), b) and c) in the superposed first and second materials and in such a way that the diverted flow of second material arrives between the two triangular outlet subsections of the third material in the transverse direction of extrusion DT1.

In order to insert inserts 28 into the three longitudinal grooves 26 of a profiled element 20, during a steps a) to d), three discontinuities are created in the first and second materials in the transverse direction of extrusion DT1.

If the method is being implemented on the co-extrusion machine 52 with roller 54, the longitudinal direction of co-extrusion DL1 extends radially around the central axis AC1.

For preference, the extruding and profiling steps of the method are performed between a roller 54 and an extrusion head 50 comprising a lower wall 56 of cylindrical profile collaborating with the exterior wall 58 of the roller.

The present invention also covers a complex rubber profiled element obtained from the method that has just been described, and, for example, using the co-extrusion head that has just been described.

At the same time, the invention also covers a tyre manufactured from a complex rubber profiled element obtained from the method that has just been described.

## Claims

1. A method for the co-extrusion of a complex rubber profiled element (20) intended for the manufacture of a tyre, the complex profiled element (20) comprising along its height (H20) a first layer (22), referred to as sublayer, of a first rubbery material, and a second layer (24), referred to as tread, of a second rubbery material superposed on the sublayer, this tread (24) and this sublayer (22) having at least one discontinuity (D20) in the width (W20) of the complex profiled element that extends in a transverse direction (DT) so that at least one insert (28) of a third rubbery material is inserted into a discontinuity (D20) of the tread (24) and of the sublayer (22) at the time of co-extrusion, the method consisting in extruding and profiling the various rubbery materials over a given co-extrusion width (L50) and in a longitudinal direction (DL1) of co-extrusion perpendicular to the transverse plane (PT) of the co-extruded profiled element, the method comprising the following succession of steps consisting in:
a) extruding the first material, this being performed discontinuously across the co-extrusion width (L50),
b) first profiling of the first material, performed discontinuously across the co-extrusion width (L50),
c) extruding the second material, this being performed discontinuously across the co-extrusion width (L50) and performed in such a way as to superpose the second material on the first material,
d) profiling the first and second materials to a profile (P66) exhibiting no discontinuity across the co-extrusion width (L50) but creating at least one longitudinal groove (26) in the profiled element (20), this profiling being performed jointly with at least an extruding of the third material next to each longitudinal groove (26) created in the profiled element (20), and
e) final profiling of the first, second and third materials to a final profile (P74) exhibiting no discontinuity across the co-extrusion width (L50) but allowing its final shape to be given to each longitudinal groove (26) created in the profiled element (20) in the preceding step
d) and situated transversely next to each insert (28) originating from an extrusion of the third material according to the preceding step d), in which, with the third material being extruded next to each longitudinal groove (26) according to an outlet cross section of determined shape, a band of non-zero height and width of the first material is extruded upstream of each third-material outlet section and underneath each third-material outlet section.

2. A method for the co-extrusion of a complex rubber profiled element (20) according to claim 1, in which the height of first material extruded upstream of each third-material outlet section is progressively reduced.

3. A method for the co-extrusion of a complex rubber profiled element (20) according to claim 2, in which the height of first material extruded upstream of each third-material outlet section is reduced in stages.

4. A method for the co-extrusion of a complex rubber profiled element (20) according to one of the preceding claims, in which, during step d), the third material is extruded according to an outlet cross section in a transverse plane (PT50) containing at least one triangular subsection and in such a way that this triangular subsection constitutes one side wall of a longitudinal groove (26) created in the profiled element (20).

5. A method for the co-extrusion of a complex rubber profiled element (20) according to claim 4, in which, during step d), the third material is extruded according to an outlet cross section in a transverse plane (PT50) containing two triangular subsections distant from one another in the transverse direction of extrusion (DT1) and in such a way that the third material extruded by these triangular subsections constitutes the two side walls of a longitudinal groove (26) created in the profiled element (20).

6. A method for the co-extrusion of a complex rubber profiled element (20) according to claim 5, in which, at the same time as performing step c), part of the flow of the second material is diverted towards a discontinuity (D20) created during steps a), b), and c) in the superposed first and second materials and in such a way that the diverted flow of second material arrives between the two triangular subsections of the third material outlet in the transverse direction of extrusion (DT1).

7. A method for the co-extrusion of a complex rubber profiled element (20) according to one of the preceding claims, in which, during steps a) to c), three discontinuities (D20) are created in the first and second materials in the transverse direction of extrusion (DT1).

8. A method for the co-extrusion of a complex rubber profiled element (20) according to one of the preceding claims, in which the longitudinal direction of co-extrusion (DL1) extends radially around a central axis (AC1).

9. A method for the co-extrusion of a complex rubber profiled element (20) according to one of the preceding claims, in which the extruding and profiling steps are performed between a roller (54) and an extrusion head (50) comprising a lower wall (56) of cylindrical profile collaborating with the exterior wall (58) of the roller.

10. A complex rubber profiled element (20) obtained from the method according to one of the preceding claims.

11. A Tyre manufactured from a complex rubber profiled element (20) according to claim 10.

## Patentansprüche

1. Verfahren zur Co-Extrusion eines komplexen Gummiprofilelements (20) zur Herstellung eines Reifens, wobei das komplexe Profilelement (20) entlang seiner Höhe (H20) eine erste Schicht (22), bezeichnet als Unterschicht, aus einem ersten gummiartigen Material, und eine zweite Schicht (24), bezeichnet als Lauffläche, aus einem zweiten gummiartigen Material, das über der Unterschicht liegt, umfasst, wobei diese Lauffläche (24) und diese Unterschicht (22) zumindest eine Diskontinuität (D20) in der Breite (W20) des komplexen Profilelements aufweisen, die sich in Querrichtung (DT) erstreckt, sodass zum Zeitpunkt der Co-Extrusion zumindest ein Einsatz (28) aus einem dritten gummiartigen Material in eine Diskontinuität (D20) der Lauffläche (24) und der Unterschicht (22) eingesetzt wird, wobei das Verfahren im Extrudieren und Profilieren der verschiedenen gummiartigen Materialien über einer gegebenen Co-Extrusionsbreite (L50) und in einer Längsrichtung (DL1) von Co-Extrusion senkrecht zur Querebene (PT) des coextrudierten Profilelements besteht, wobei das Verfahren die folgende Abfolge von Schritten umfasst, die besteht aus:
a) Extrudieren des ersten Materials, wobei dies diskontinuierlich über die Co-Extrusionsbreite (L50) durchgeführt wird,
b) erstes Profilieren des ersten Materials, diskontinuierlich über die Co-Extrusionsbreite (L50) durchgeführt,
c) Extrudieren des zweiten Materials, wobei dies diskontinuierlich über die Co-Extrusionsbreite (L50) durchgeführt wird und in einer Weise durchgeführt wird, dass das zweite Material auf dem ersten Material liegt,
d) Profilieren des ersten und des zweiten Materials zu einem Profil (P66), das keine Diskontinuität über die Co-Extrusionsbreite (L50) zeigt, aber Erzeugen zumindest einer längs verlaufenden Nut (26) im Profilelement (20), wobei dieses Profilieren gemeinsam mit zumindest einem Extrudieren des dritten Materials neben jeder im Profilelement (20) erzeugten längs verlaufenden Nut (26) durchgeführt wird, und
e) abschließendes Profilieren des ersten, zweiten und dritten Materials zu einem abschließenden Profil (P74), das keine Diskontinuität über die Co-Extrusionsbreite (L50) zeigt, aber ermöglicht, dass seine abschließende Form jeder längs verlaufenden Nut (26) gegeben wird, die im vorhergehenden Schritt d) im Profilelement (20) erzeugt wurde und die sich quer neben jedem Einsatz (28) befindet, herrührend aus einer Extrusion des dritten Materials gemäß dem vorhergehenden Schritt d), wobei, wenn das dritte Material neben jeder längs verlaufenden Nut (26) gemäß einem Auslassquerschnitt von bestimmter Form extrudiert wird, ein Band des ersten Materials mit von Null verschiedener Höhe und Breite stromaufwärts jedes Auslassabschnitts des dritten Materials und unter jedem Auslassabschnitt des dritten Materials extrudiert wird.

2. Verfahren zur Co-Extrusion eines komplexen Gummiprofilelements (20) nach Anspruch 1, wobei die Höhe des ersten Materials, das stromaufwärts jedes Auslassabschnitts des dritten Materials extrudiert wird, progressiv verringert wird.

3. Verfahren zur Co-Extrusion eines komplexen Gummiprofilelements (20) nach Anspruch 2, wobei die Höhe des ersten Materials, das stromaufwärts jedes Auslassabschnitts des dritten Materials extrudiert wird, stufenweise verringert wird.

4. Verfahren zur Co-Extrusion eines komplexen Gummiprofilelements (20) nach einem der vorhergehenden Ansprüche, wobei, während Schritt d), das dritte Material gemäß einem Auslassquerschnitt in einer Querebene (PT50) extrudiert wird, der zumindest einen dreieckigen Unterabschnitt enthält, und in einer Weise, dass dieser dreieckige Unterabschnitt eine Seitenwand einer im Profilelement (20) erzeugten längs verlaufenden Nut (26) bildet.

5. Verfahren zur Co-Extrusion einer komplexen Gummiprofilelements (20) nach Anspruch 4, wobei, während Schritt d), das dritte Material gemäß einem Auslassquerschnitt in einer Querebene (PT50) extrudiert wird, der zwei dreieckige Unterabschnitte enthält, die in der Querrichtung der Extrusion (DT1) entfernt voneinander sind, und in einer Weise, dass das durch die dreieckigen Unterabschnitte extrudierte dritte Material die zwei Seitenwände einer im Profilelement (20) erzeugten längs verlaufenden Nut (26) bildet.

6. Verfahren zur Co-Extrusion eines komplexen Gummiprofilelements (20) nach Anspruch 5, wobei, zur gleichen Zeit wie das Durchführen von Schritt c), ein Teil des Flusses des zweiten Materials in Richtung einer Diskontinuität (D20) abgeleitet wird, die während der Schritte a), b) und c) in den überlagerten ersten und zweiten Materialien erzeugt wurde, und in einer Weise, dass der abgeleitete Fluss von zweitem Material zwischen den zwei dreieckigen Unterabschnitten des Auslasses des dritten Materials in der Querrichtung der Extrusion (DT1) ankommt.

7. Verfahren zur Co-Extrusion eines komplexen Gummiprofilelements (20) nach einem der vorhergehenden Ansprüche, wobei, während der Schritte a) bis c), drei Diskontinuitäten (D20) im ersten und im zweiten Material in der Querrichtung der Extrusion (DT1) erzeugt werden.

8. Verfahren zur Co-Extrusion eines komplexen Gummiprofilelements (20) nach einem der vorhergehenden Ansprüche, wobei sich die Längsrichtung der Co-Extrusion (DL1) radial um eine mittlere Achse (AC1) erstreckt.

9. Verfahren zur Co-Extrusion eines komplexen Gummiprofilelements (20) nach einem der vorhergehenden Ansprüche, wobei die Extrudier- und Profilierungsschritte zwischen einer Walze (54) und einem Extrusionskopf (50) durchgeführt werden, umfassend eine untere Wand (56) eines zylindrischen Profils, das mit der Außenwand (58) der Walze zusammenwirkt.

10. Komplexes Gummiprofilelement (20), erhalten aus dem Verfahren nach einem der vorhergehenden Ansprüche.

11. Reifen, hergestellt aus einem komplexen Gummiprofilelement (20) nach Anspruch 10.

## Revendications

1. Méthode de coextrusion d'un profilé caoutchouteux complexe (20) destiné à la fabrication d'un pneumatique, le profilé complexe (20) comprenant dans sa hauteur (H20) une première couche (22), dite sous-couche, d'un premier matériau caoutchouteux et une deuxième couche (24), dite bande de roulement, d'un deuxième matériau caoutchouteux superposée sur la sous-couche, cette bande de roulement (24) et cette sous-couche (22) présentant au moins une discontinuité (D20) dans la largeur (W20) du profilé complexe qui s'étend dans une direction transversale (DT) de façon à ce qu'au moins un insert (28) d'un troisième matériau caoutchouteux soit inséré dans une discontinuité (D20) de la bande de roulement (24) et de la sous-couche (22) lors de la coextrusion, le procédé consistant à extruder et à profiler les différents matériaux caoutchouteux sur une largeur de coextrusion (L50) donnée et dans une direction longitudinale (DL1) de coextrusion perpendiculaire au plan transversal (PT) du profilé coextrudé, le procédé comprenant successivement les étapes consistant en :
a) une extrusion du premier matériau réalisée de manière discontinue dans la largeur de coextrusion (L50),
b) un premier profilage de ce premier matériau réalisé de manière discontinue dans la largeur de coextrusion (L50),
c) une extrusion du deuxième matériau réalisée de manière discontinue dans la largeur de coextrusion (L50) et réalisée de manière à superposer le deuxième matériau sur le premier matériau,
d) un profilage des premier et deuxième matériaux selon un profil (P66) ne présentant pas de discontinuité dans la largeur de coextrusion (L50) mais créant au moins une rainure longitudinale (26) dans le profilé (20), ce profilage étant réalisé conjointement à au moins une extrusion du troisième matériau à côté de chaque rainure longitudinale (26) créée dans le profilé (20),
e) un profilage final des premier, deuxième et troisième matériaux selon un profil final (P74) ne présentant pas de discontinuité dans la largeur de coextrusion (L50) mais permettant de conférer sa forme finale à chaque rainure longitudinale (26) créée dans le profilé (20) à l'étape d) précédente et située transversalement à côté de chaque insert (28) issu d'une extrusion du troisième matériau selon l'étape d) précédente, avec le troisième matériau étant extrudé à côté de chaque rainure longitudinale (26) selon une section de sortie de forme déterminée, une bande de hauteur et de largeur non nulles du premier matériau est extrudée en amont de chaque section de sortie du troisième matériau et sous chaque section de sortie du troisième matériau..

2. Méthode de coextrusion d'un profilé caoutchouteux complexe (20) selon la revendication 1, dans lequel la hauteur de premier matériau extrudée en amont de chaque section de sortie du troisième matériau est réduite progressivement.

3. Méthode de coextrusion d'un profilé caoutchouteux complexe (20) selon la revendication 2, dans lequel la hauteur de premier matériau extrudée en amont de chaque section de sortie du troisième matériau est réduite par palier.

4. Méthode de coextrusion d'un profilé caoutchouteux complexe (20) selon l'une des revendications précédentes, dans lequel, lors de l'étape d), le troisième matériau est extrudé selon une section de sortie dans un plan transversal (PT50) comprenant au moins une sous-section triangulaire et de façon à ce que cette sous-section triangulaire constitue un flanc d'une rainure longitudinale (26) créée dans le profilé (20).

5. Méthode de coextrusion d'un profilé caoutchouteux complexe (20) selon la revendication 4, dans lequel, lors de l'étape d), le troisième matériau est extrudé selon une section de sortie dans un plan transversal (PT50) comprenant deux sous-sections triangulaires distantes l'une de l'autre dans la direction transversale d'extrusion (DT1) et de façon à ce que le troisième matériau extrudé par ces sous-sections triangulaires constitue les deux flancs d'une rainure longitudinale (26) créée dans le profilé (20).

6. Méthode de coextrusion d'un profilé caoutchouteux complexe (20) selon la revendication 5, dans lequel, conjointement à la réalisation de l'étape c), une partie du flux du deuxième matériau est déviée vers une discontinuité (D20) créée lors des étapes a), b) et c) dans les premier et deuxième matériaux superposés et de façon que le flux de deuxième matériau dévié arrive entre les deux sous-sections triangulaires de sortie du troisième matériau dans la direction transversale d'extrusion (DT1).

7. Méthode de coextrusion d'un profilé caoutchouteux complexe (20) selon l'une des revendications précédentes, dans lequel, lors des étapes a) à c), on crée trois discontinuités (D20) dans les premier et deuxième matériaux dans la direction transversale d'extrusion (DT1).

8. Méthode de coextrusion d'un profilé caoutchouteux complexe (20) selon l'une des revendications précédentes, dans lequel la direction longitudinale de coextrusion (DL1) s'étend radialement autour d'un axe central (AC1).

9. Méthode de coextrusion d'un profilé caoutchouteux complexe (20) selon l'une des revendications précédentes, dans lequel les étapes d'extrusion et de profilage sont réalisées entre un rouleau (54) et une tête d'extrusion (50) comprenant une paroi inférieure (56) à profil cylindrique coopérant avec la paroi extérieure (58) du rouleau.

10. Profilé caoutchouteux complexe (20) obtenu selon la méthode de l'une des revendications précédentes.

11. Pneumatique fabriqué à partir d'un profilé caoutchouteux complexe (20) selon la revendication 10.
